# EUROPÄISCHE PATENTSCHRIFT

(11) **EP 2 826 038 B1**
(45) Veröffentlichungstag und Bekanntmachung des Hinweises auf die Patenterteilung: **03.05.2017**
(21) Anmeldenummer: 13713081.1
(22) Anmeldetag: 13.03.2013
(51) Int. Cl.: B01D 53/68, G21C 9/004, G21C 9/008, G21F 9/02, G21C 13/02

(54) **REAKTORDRUCKENTLASTUNGSFILTERSYSTEM**
REACTOR PRESSURE RELIEF FILTER SYSTEM
SYSTÈME DE FILTRES POUR UNE DÉTENTE DE LA PRESSION D'UN RÉACTEUR

(30) Priorität: 16.03.2012 DE 102012005204
(43) Veröffentlichungstag der Anmeldung: 21.01.2015
(73) Patentinhaber: Westinghouse Electric Germany GmbH, 68167 Mannheim (DE)
(72) Erfinder: FREIS, Daniel, 68259 Mannheim (DE); OBENLAND, Ralf, 68163 Mannheim-Niederfeld (DE); TIETSCH, Wolfgang, 68309 Mannheim (DE); MARTINSTEG, Hans, 52159 Roetgen-Rott (DE)
(74) Vertreter: Eickmeyer, Dietmar
(86) Internationale Anmeldenummer: PCT/EP2013/000733
(87) Internationale Veröffentlichungsnummer: WO 2013/135374

(56) Entgegenhaltungen:
- DE-A1- 3 815 850
- JP-A- H03 235 093
- US-A- 5 078 960
- US-A- 5 596 613
- US-A1- 2012 051 488

## Beschreibung

Die Erfindung betrifft ein Reaktordruckentlastungsfiltersystem, umfassend einen von einer druckfesten Reaktorummantelung hermetisch umschlossenen Innenraum, wenigstens eine Druckentlastungsöffnung durch die Reaktorummantelung, einen Trockenfilter für einen bei Überdruck im Innenraum aus der Druckentlastungsöffnung austretenden Gasmassenstrom, wobei die Filtereffizienz sowohl von der mittleren Verweilzeit des Gasmassenstroms im Trockenfilter als auch vom Temperaturabstand des Gasmassenstroms zum jeweiligen Taupunkt abhängt und einen Strömungskanal zur Verbindung von Druckentlastungsöffnung und Trockenfilter. Die Erfindung betrifft auch ein entsprechendes Verfahren zur Dimensionierung der Blende und des Trockenfilters.

Es ist allgemein bekannt, dass Kernkraftwerke in der Regel zumindest über eine gasdichte Stahlhülle (Confinement) meistens jedoch über einen druckfesten und gasdichten Reaktorsicherheitsbehälter (Containment), also eine Reaktorummantelung, verfügen, der den Primärkreislauf mit dem Reaktordruckbehälter umschließt. Die Reaktorummantelung beziehungsweise der Reaktorsicherheitsbehälter (RSB) oder das Confinement fungieren als Barriere für aerosol- und gasförmige radioaktive Stoffe und verhindern im Betrieb und während eines Auslegungsstörfalls zuverlässig, dass diese in die Umgebung gelangen.

In einem die Auslegung der Anlage überschreitenden Störfall, z. B. bei einem langfristigen Ausfall aller Systeme zur Nachwärmeabfuhr, kann es zu einer unzulässigen Druckerhöhung im RSB bis hin zum Versagen kommen. Um ein solches Versagen und damit die Freisetzung großer Mengen Radioaktivität zu verhindern, gibt es in einigen Kernkraftwerken Systeme zur kontrollierten und gefilterten Druckentlastung.

Eine bekannte Methode zur gefilterten Druckentlastung ist die sogenannte Trockenfiltermethode. Bei dieser Methode wird der Gasmassenstrom aus dem RSB zunächst durch ein Metallfaserfilter, auch Aerosolfilter genannt, zur Abscheidung von aerosolförmigen Spaltprodukten und anschließend durch ein sogenanntes Molekularsieb zur Abscheidung von gasförmigem Jod (elementar und organisch) geleitet, bevor er in die Umgebung des Kraftwerks abgelassen wird. Durch die Filterung wird ein Großteil der Spaltprodukte zurückgehalten. Dadurch können kurz- und langfristige Evakuierungen der Bevölkerung sowie Landverluste durch Kontamination weitestgehend vermieden werden.

Das Molekularsieb weist bekanntermaßen mehrere Filterbetten mit einer Schüttung aus silberdotierten kugelförmigen Zeolithen auf. Die Zeolithen verfügen über eine hohe innere Mikroporosität und haben daher eine sehr hohe spezifische Oberfläche. Der Filtereffekt beruht auf der Reaktion zwischen dem auf der wirksamen gesamten Zeolithoberfläche aufgebrachten Silber und dem im Gasmassenstrom vorhandenen gasförmigen Jod. Dieser Prozess ist als chemische Sorption bekannt.

Die Filtereffizienz des Molekularsiebs hängt im Wesentlichen von der Verweilzeit des zu filternden Gases im Filterbett und der verfügbaren mit Silberatomen belegten Zeolithoberfläche ab. Diese wirksame Silberoberfläche befindet sich größtenteils innerhalb der Zeolithporen. Bei einer Erhöhung der Gasfeuchte füllen sich diese Mikroporen zum Teil mit Wasser, so dass für das im Gas transportierte Jod dadurch weniger Oberfläche und damit weniger Silber für die Reaktion zur Verfügung steht. Der Wirkungsgrad des Filters nimmt daher mit steigender Feuchtigkeit, bzw. niedrigerem Temperaturabstand zum Taupunkt ab.

Nach Einleitung einer Druckentlastung aus einer Reaktorummantelung sinkt der Innendruck in dem von ihr umschlossenen Raum und der anfängliche Gasmassen-Gasmassenstrom reduziert sich im Laufe der Druckentlastung. Die Verweilzeit des Gasmassenstroms im Molekularsieb beziehungsweise Trockenfilter ist deshalb am Anfang einer Druckentlastung besonders niedrig, so dass der Trockenfilter entsprechend groß auszulegen ist und damit für den geringeren Massenstrom gegen Ende der Druckentlastung deutlich überdimensioniert.

Zur besseren Ausnutzung des Trockenfilters ist es auch vorgesehen, dass der Gasmassenstrom aktiv durch Personalhandlungen geregelt werden muss. Dies ist insbesondere vor dem Hintergrund eines zu unterstellenden Szenarios eines vollständigen Stromausfalls und einer Nichtverfügbarkeit von Personal nachteilig und kann dazu führen, dass das System im Anforderungsfall nicht oder nicht optimal eingesetzt werden kann.

Das Patentdokument JPH03235093 offenbart eine Druckentlastungsvorrichtung für ein Containment einer Nuklearanlage, Zur Vermeidung einer Überlast der verwendeten Komponenten wie beispielsweise einem Filter ist eine Blende im Strömungskanal der Druckentlastungsvorrichtung vorgesehen.

Das Patentdokument DE 3815850 A1 offenbart ein Verfahren zur Druckentlastung eines Kernkraftwerks mit einer Sicherheitshülle zum Einschluss von Aktivitätsträgern und mit einem Auslass für einen Entlastungsstrom, der aus der Sicherheitshülle über ein Filter in die Atmosphäre führt. Der Entlastungsstrom wird mit einem Metallfaserfilter entfeuchtet und aerosolgefiltert.

Das Patentdokument US 5 078 960 A offenbart eine Anordnung für die Druckentlastung des Sicherheitsbehälters einer Kernkraftanlage mit Druckwasserreaktor oder Siedewasserreaktor im Störungsfall, wobei der Druckluftstrom aus dem Sicherheitsbehälter gefiltert an die Atmosphäre abgegeben wird.

Das Patentdokument US 5 596 613 A offenbart ein System zur Druckentlastung des Containments eines Siedewasserreaktors im Störfall. Je nach Randbedingungen können in dem hierzu verwendeten Röhrensystem an einer oder mehreren Stellen Blenden vorgesehen werden.

Das Patentdokument US 2012/051488 A1 offenbart ein Verfahren zur Druckentlastung eines Kernkraftwerks mit einer Sicherheitshülle zum Einschluss von Aktivitätsträgern und mit einem Auslass für einen Entlastungsstrom, wobei der Entlastungsstrom über eine mit einem Filtersystem versehene Entlastungsleitung aus der Sicherheitshülle in die Atmosphäre geführt wird und wobei das Filtersystem eine Filterkammer mit einem Filterkammereinlass, einem Filterkammerauslass und einem dazwischen liegenden Sorbensfilter umfasst.

Aufgabe der Erfindung ist es daher, ein Reaktordruckentlastungsfiltersystem bereitzustellen, welches ohne menschliche Eingriffe und ohne externe Energie- oder Medienversorgung für eine gezielte Druckentlastung sorgt und dabei während des gesamten Druckentlastungsvorgangs eine hohe Filtereffizienz aufweist.

Diese Aufgabe wird gelöst durch ein Reaktordruckentlastungsfiltersystem und ein Verfahren zur Dimensionierung dessen Blende und dessen Trockenfilter laut Ansprüche 1 und 6. Das Verfahren beruht im Wesentlichen auf dem Einsatz einer passiven Blende zur Entspannung des Gasmassenstroms vor dem Trockenfilter. Die Blende wird dabei so konstruiert, dass bei Einleitung der Druckentlastung bei Vorliegen eines definierten Drucks im Innenraum der Reaktorummantelung ein gewünschter Druckentlastungsmassenstrom auftritt. Der Großteil der Druckverluste im System tritt dabei über der Blende auf, so dass der statische Druck vor dem Trockenfilter quasi-atmosphärisch ist. Aufgrund der hohen Druckdifferenz zwischen dem Innenraum der Reaktorummantelung und der Umgebungsatmosphäre, in welche der gefilterte Gasmassenstrom während der Druckentlastung abgelassen wird, treten dabei innerhalb der Blende kritische Strömungszustände auf. Durch diesen Entspannungsvorgang wird, eine Überhitzung des Gasmassenstromes oder typischerweise des Dampf-/Gasgemischs erreicht.

Aufgrund der kritischen Strömungszustände in der Blende ist der Gasmassenstrom bei Druckentlastung nahezu proportional zum Druck im Innenraum der Reaktorummantelung. Zu Beginn der Druckentlastung, bei hohem Innendruck, ist der Massenstrom relativ hoch, gegen Ende der Druckentlastung, bei niedrigem Innendruck, ist der Massenstrom relativ gering. Andererseits ist der erreichbare Taupunktabstand zu Beginn der Druckentlastung aufgrund der Überhitzung des Gasmassenstroms hoch und gegen Ende der Druckentlastung relativ niedrig.
In Bezug auf die Filtereffizienz des Trockenfilters sind beide Effekte gegenläufig, wirken also in vorteilhafter Weise einander entgegen und heben sich im Idealfall auf. Somit ist also zu Anfang der Druckentlastung durch den hohen Gasmassenstrom einerseits eine besonders kurze Verweilzeit im Trockenfilter gegeben, wobei dieses aber aufgrund der hohen Temperatur des Gasmassenstromes und aufgrund des dann großen Taupunktabstandes einen besonders hohen Wirkungsgrad aufweist.
Somit ist in vorteilhafter Weise ein Reaktordruckentlastungsfiltersystem bereitgestellt, welches ohne menschliche Eingriffe und ohne externe Energie- oder Medienversorgung für eine gezielte Druckentlastung sorgt und während des gesamten Druckentlastungsvorgangs eine hohe Filtereffizienz aufweist.

Gemäß des erfindungsgemäßen Reaktordruckentlastungsfiltersystems ist die passive Blende strömungstechnisch unmittelbar vor dem Trockenfilter vorgesehen. Der Abstand zwischen der Blende, wo ja durch Entspannung eine Erhitzung des Gasmassenstromes erfolgt, und dem Trockenfilter ist erfindungsgemäß gering zu halten, um ein Abkühlen des erhitzten Gasmassenstromes vor Eintritt in den Trockenfilter möglichst zu vermeiden. Ein Strömungsabstand im Bereich von einigen Metern aber durchaus auch darüber ist beispielsweise als durchaus dafür geeignet anzusehen. Die Filtereffizienz wird dadurch in vorteilhafter Weise gesteigert.
Gemäß einer weiteren Ausführungsform des Reaktordruckentlastungsfiltersystems ist im Eingangsbereich des Strömungskanals eine Berstscheibe vorgesehen, welche diesen hermetisch verschließt und derart ausgestaltet ist, dass sie bei Überschreiten eines bestimmten Berstdrucks zerbirst.
Anders als in bekannten Konfigurationen wird die Druckentlastung in dem erfindungsgemäßen Reaktordruckentlastungsfiltersystem damit vollständig passiv durch Bersten der Berstscheibe bei einem definierten Druck im Innenraum der Kernummantelung ausgelöst. Aktive Komponenten sind damit in vorteilhafter Weise vermieden.

Entsprechend einer weiteren Variante des Reaktordruckentlastungsfiltersystems ist der Bereich des Strömungskanals zwischen Blende und Trockenfilter an seiner Wandung zumindest abschnittsweise thermisch isoliert. Auch hierdurch wird ein Abkühlen des erhitzten Gasmassenstroms reduziert und die Filtereffizienz in vorteilhafter Weise gesteigert. Diese Variante bietet sich beispielsweise auch an, wenn aus baulichen Gründen keine unmittelbare Nähe zwischen Blende und Trockenfilter erreicht werden kann und ein Abstand von beispielsweise einigen 10m zu überbrücken ist.

Gemäß der Erfindung ist im Strömungskanal strömungstechnisch vor der Blende ein passives Druckentlastungsventil vorgesehen, das sich bei Überschreiten eines bestimmten Maximaldrucks öffnet und bei Unterschreiten eines bestimmten Minimaldrucks schließt.
Das Druckentlastungsventil arbeitet völlig passiv, beispielsweise mit Federelementen, also ohne Zufuhr einer Schaltenergie, und weist ein Hystereseverhalten auf. Dadurch wird vollständig passiv gewährleistet, dass der Druckentlastungsvorgang bei Erreichen eines gewünschten Minimaldrucks im Innenraum der Reaktorummantelung beendet wird. Auf diese Weise wird der Reaktorummantelung vor einer etwaigen Unterdruckbildung, die zu ihrer Beschädigung führen kann, geschützt. Gemäß der Erfindung ist der Trockenfilter ein Molekularsieb zur Abscheidung von gasförmigem Jod. Ein derartiger Filtertyp hat sich bei bestehenden Druckentlastungsfiltersystemen bewährt und weist eine Abhängigkeit seiner Filtereffizienz sowohl von der mittleren Verweilzeit des Gasmassenstroms darin als auch vom Temperaturabstand des Gasmassenstroms zum jeweiligen Taupunkt auf. Gemäß der Erfindung sind die Blende und der Trockenfilter unter Berücksichtigung jeweiliger Gasmassenströme und Druckverhältnisse derart aufeinander abgestimmt, dass eine annähernd konstante Filtereffizienz gewährleistet ist, sich die zuvor genannten Parameter mittleren Verweilzeit des Gasmassenstroms und Temperaturabstand des Gasmassenstroms zum jeweiligen Taupunkt zumindest annähernd kompensieren. Das Trockenfilter wird dann bei allen während eines Druckentlastungsvorgangs auftretenden Druckverhältnissen in einem optimalen Bereich betrieben.

Gemäß einer weiteren Variante ist strömungstechnisch vor der Blende ein Aerosolfilter vorgesehen. Ein Aerosolfilter ist ein Metallfaserfilter zur Abscheidung von aerosolförmigen Spaltprodukten und hat sich bei bestehenden Druckentlastungsfiltersystemen bewährt.
Die erfindungsgemäße Aufgabe wird auch gelöst durch ein Verfahren zur Dimensionierung der Blende und des Trockenfilters für ein Reaktordruckentlastungsfiltersystem nach einem der Ansprüche 1 bis 6, gekennzeichnet durch folgende Schritte:
- Dimensionieren der Blende derart, dass sich bei Beginn einer Druckentlastung bei vorgegebenem Druck im Innenraum ein gewünschter Gasmassenstrom einstellt,
- Bestimmung von Gasmassenströmen und erreichbaren Taupunktabständen für verschiedene Druckverhältnisse im Innenraum bei gegebener Blende,
- Bestimmung der jeweils mindestens notwendigen Verweilzeiten im Trockenfilter für die verschiedenen Druckverhältnisse unter Berücksichtigung der jeweiligen Filtereffizienz,
- Dimensionierung des Trockenfilters derart, dass für alle verschiedenen Druckverhältnisse die mindestens notwendige Verweilzeit erreicht ist.
Die Blende wird so konstruiert, dass bei Einleitung der Druckentlastung bei Vorliegen eines definierten Drucks Innenraum der Reaktorummantelung der gewünschte Druckentlastungsmassenstrom auftritt. Dazu werden zuerst in Abhängigkeit vom Druck im Innenraum der Reaktorummantelung die Gasmassenströme und erreichbaren Taupunktabstände bestimmt. Aus diesen beiden Parametern wird, unter Kenntnis der Filtereffizienzkurve beispielsweise eines Zeolithen, die notwendige Verweilzeit des Gasmassenstroms für den gesamten Prozess der Druckentlastung bestimmt. Anschließend werden die Tiefe und Anströmfläche beispielsweise des Filterbetts des Molekularsiebs so dimensioniert, dass die benötigte Verweilzeit während des gesamten Druckentlastungsvorgangs erreicht wird. Die damit erreichten Vorteile sind bereits bei der Beschreibung des erfindungsgemäßen Reaktordruckentlastungsfiltersystems erläutert worden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein exemplarisches Reaktordruckentlastungsfiltersystem,
- Fig. 2: einen exemplarischen Strömungskanal mit Blende sowie
- Fig. 3: einen schematischen Verlauf von Verweilzeit, Taupunktabstand und Filtereffizienz während des Druckentlastungsvorgangs.

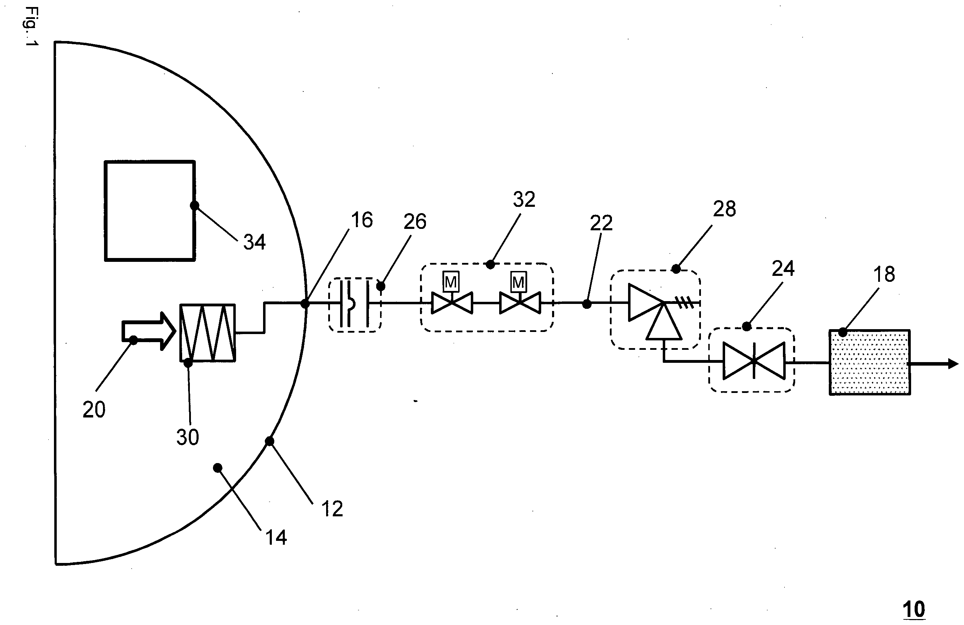

Fig. 1 zeigt exemplarisches Reaktordruckentlastungsfiltersystem 10 in einer schematischen Darstellung. Von einer Reaktorummantelung 12 ist ein Innenraum 14 hermetisch umschlossen. In dem Innenraum 14 angeordnet ist ein Reaktor 34, durch welchen im Unglücksfall ein Überdruck entstehen kann, insbesondere durch Verdampfen von Wasser zu Wasserdampf. Aus Analysen und Versuchen ist bekannt, dass während eines schweren Störfalls in einem Reaktor mindestens eine Temperatur in Höhe der Sättigungstemperatur des Wasserdampfpartialdrucks herrscht.

Der Vorgang einer Druckentlastung wird in diesem Beispiel eingeleitet durch das Bersten einer Berstscheibe 26, welche zunächst einen Strömungskanal 22 hermetisch zum Innenraum 14 hin verschließt. Die Berstscheibe 26 ist ein völlig passives Element, welches bei vorgegebenem Berstdruck bricht und damit den Strömungskanal 22 freigibt. Somit wird bei dann freigegebenem Strömungskanal 22 aufgrund unterschiedlicher Druckverhältnisse im Innenraum 14 und der Umgebung ein Gasmassenstrom 20 initiiert. Bei einer Druckentlastung tritt nun der Gasmassenstrom 20 durch ein Aerosolfilter 30 in einen Ausleitkanal ein und wird durch eine Druckentlastungsöffnung 16 der Reaktorummantelung 12 nach außerhalb in den Strömungskanal 22 geleitet.

Der Gasmassenstrom 20 passiert in diesem Beispiel zunächst motor- oder manuell betriebene Gebäudeabschlußarmaturen 32, welche jedoch standardmäßig offen sind und nicht erfindungswesentlich sind. Im Anschluss, beispielsweise nach einigen 10m Strömungskanallänge, wird der Gasmassenstrom 20 in ein passives Druckentlastungsventil 28 geleitet, das sich bei Überschreiten eines bestimmten Maximaldrucks öffnet und bei Unterschreiten eines bestimmten Minimaldrucks schließt. Der Berstdruck der Berstscheibe 26 ist in jedem Fall höher auszulegen als der Maximaldruck des Druckentlastungsventils 28, so dass das Druckentlastungsventils 28 im Falle eines Druckausgleiches bei berstender Berstscheibe 26 sofort öffnet.

Nachfolgend passiert der Gasmassenstrom 20 eine Blende 24, welche den Strömungsquerschnitt des Strömungskanals 22 verengt. Eine Blende kann beispielsweise durch ein stufenlos einstellbares Ventilmittel realisiert sein oder aber auch durch ein ringähnliches Verengungselement oder dergleichen. Auf der innenraumseitigen Seite der Blende herrscht annährend derselbe Druck wie im Innenraum 14, wobei in der Blende 24 eine Entspannung des Gasmassenstroms 20 bei gleichzeitiger Trocknung des Dampfes, d.h. einer Erhöhung des Temperaturabstands zwischen Taupunkttemperatur und Gasmassenstromtemperatur, erfolgt. Unmittelbar nach Durchströmen der Blende 24 wird der dann erhitzte Gasmassenstrom 20 in einen Trockenfilter 18, in diesem Fall ein Molekularsieb zur Filterung von Jod, geleitet. Die unmittelbare Nähe von beispielsweise wenigen Metern vermeidet in vorteilhafter Weise eine signifikante Abkühlung des Gasmassenstroms, so dass ein hoher Temperaturabstand zum Taupunkt gegeben ist. Die Filtereffizienz wird damit in vorteilhafter Weise gesteigert. Nachfolgend tritt der gefilterte Gasmassenstrom in die Umgebung aus. Hierbei wird der Druck im Innenraum sukzessive abgebaut.

Das Druckentlastungsventil 28 weist ein Hystereseverhalten auf und beendet den Druckausgleichsvorgang bei Unterschreiten eines vorgebbaren Minimaldrucks. Bei erneutem Druckanstieg über den Maximaldruck wird bedarfsweise ein neuer Druckausgleichsvorgang durch erneutes Öffnen des Druckentlastungsventils 28 initiiert.

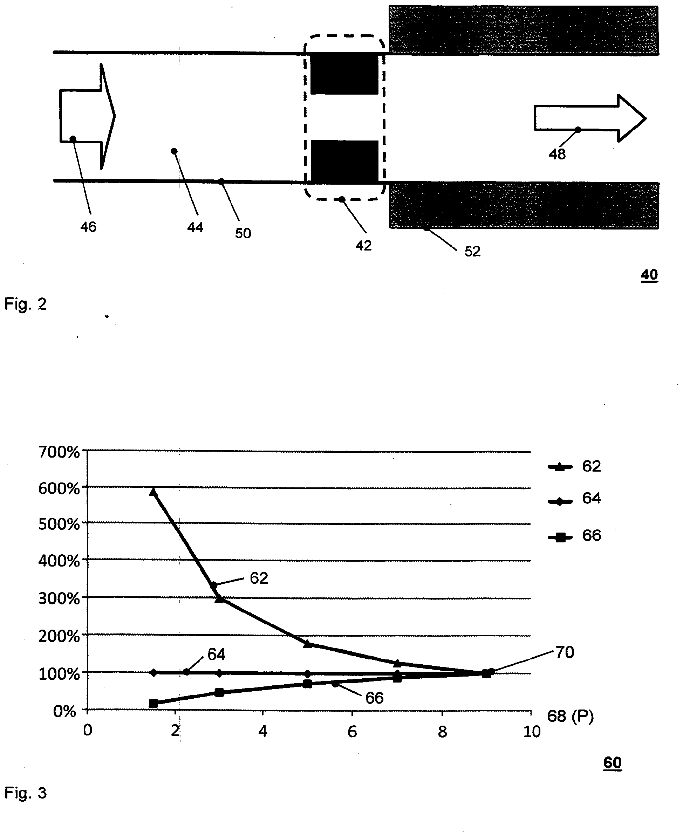

Fig. 2 zeigt einen exemplarischen Strömungskanal mit Blende in einer Abschnittsansicht 40. Der Strömungskanal 44 ist durch eine Wandung 50 umschlossen. In der Darstellung mittig ist eine Blende 42 angeordnet, durch welche der Strömungsquerschnitt des Strömungskanals 44 reduziert ist. Ein von der Reaktorseite eintretender Gasmassenstrom 46 weist einen im Verhältnis hohen Druck auf, wird beim Passieren der Blende entspannt und dabei erhitzt, tritt auf der anderen Seite als Gasmassenstrom 48 wieder aus und wird einem nicht gezeigten Trockenfilter zugeführt. Um einen Temperaturverlust des erhitzten Gasmassenstroms auf dem Weg zum Trockenfilter zu vermeiden ist in diesem Beispiel eine thermische Isolation 52 des Strömungskanals 44 vorgesehen.

Fig. 3 zeigt einen schematischen Verlauf von Verweilzeit 62, Taupunktabstand 66 und Filtereffizienz 64 während eines erfindungsgemäßen Druckentlastungsvorgangs mit verschiedenen Druckverhältnissen 68 in einer dimensionslosen Darstellung 60. Der Druckentlastungsvorgang beginnt mit einem Maximaldruck wie mit der Bezugsziffer 70 angedeutet. Die Blende ist derart ausgelegt, dass sich bei diesem Maximaldruck ein gewünschter Gasmassenstrom einstellt. Bei dann sinkendem Systemdruck erfolgt zunehmend eine geringere Erwärmung des Gasmassenstroms, so dass der Taupunktabstand 66 sinkt. Auf der anderen Seite steigt aber die Verweildauer 62 im Trockenfilter, so dass diese beiden Effekte sich gegenseitig kompensieren und sich idealerweise eine konstant hohe Filtereffizienz 64 einstellt.

### Bezugszeichenliste

- 10: exemplarisches Reaktordruckentlastungsfiltersystem
- 12: Reaktorummantelung
- 14: Innenraum
- 16: Druckentlastungsöffnung durch Reaktorummantelung
- 18: Trockenfilter
- 20: Gasmassenstrom
- 22: Strömungskanal
- 24: passive Blende
- 26: Berstscheibe
- 28: passives Druckentlastungsventil
- 30: Aerosolfilter
- 32: Gebäudeabschlussarmaturen
- 34: Reaktor
- 40: exemplarischer Strömungskanal mit Blende
- 42: exemplarische Blende
- 44: Strömungskanal
- 46: Gasmassenstrom vor Passieren der Blende
- 48: Gasmassenstrom nach Passieren der Blende
- 50: Wandung des Strömungskanals
- 52: thermische Isolation des Strömungskanals
- 60: schematischer Verlauf von Verweilzeit, Taupunktabstand und Filtereffizienz während des Druckentlastungsvorgangs
- 62: Verweilzeit
- 64: Filtereffizienz
- 66: Taupunktabstand
- 68: verschiedene Druckverhältnisse im Trockenfilter
- 70: Startpunkt der Druckentlastung

## Patentansprüche

1. Reaktordruckentlastungsfiltersystem (10), umfassend
• einen von einer druckfesten Reaktorummantelung (12) hermetisch umschlossenen Innenraum (14),
• wenigstens eine Druckentlastungsöffnung (16) durch die Reaktorummantelung (12),
• einen Trockenfilter (18) für einen bei Überdruck im Innenraum (14) aus der Druckentlastungsöffnung (16) austretenden Gasmassenstrom (20, 46, 48),
• wobei der Trockenfilter (18) ein Molekularsieb zur Abscheidung von gasförmigem Jod ist,
• wobei die Filtereffizienz sowohl von der mittleren Verweilzeit des Gasmassenstroms (20, 46, 48) im Trockenfilter (18) als auch vom Temperaturabstand des Gasmassenstroms (20, 46, 48) zum jeweiligen Taupunkt abhängt,
• einen Strömungskanal (22, 44) zur Verbindung von Druckentlastungsöffnung (16) und Trockenfilter (18), **dadurch gekennzeichnet,**
**dass** der Trockenfilter (18) ein Molekularsieb zur Abscheidung von gasförmigem Jod ist, wobei die Filtereffizienz sowohl von der mittleren Verweilzeit des Gasmassenstroms (20, 46, 48) im Molekularsieb (18) als auch vom Temperaturabstand des Gasmassenstroms (20, 46, 48) zum jeweiligen Taupunkt abhängt,
• **dass** im Strömungskanal (22, 44) strömungstechnisch unmittelbar vor dem Molekularsieb (18) eine passive Blende (24, 42) vorgesehen ist, wodurch eine Überhitzung eines zu Beginn einer Druckentlastung durch das Molekularsieb strömenden Gasmassenstromes erreicht ist, und dass
• die passive Blende (24, 42) und das Molekularsieb (18) derart dimensioniert sind,
**dass** sich der Effekt einer erhöhten Filtereffizienz durch eine Überhitzung eines hohen Gasmassenstroms (20, 46, 48) und der entgegen wirkende Effekt einer erhöhten Filtereffizienz durch längere Verweilzeit bei niedrigem Gasmassenstrom (20, 46, 48) derart kompensieren, dass über den Zeitraum einer Druckentlastung mit abnehmendem Gasmassenstrom (20, 46, 48) eine annähernd konstante Filtereffizienz gewährleistet ist.

2. Reaktordruckentlastungsfiltersystem nach Anspruch 1, **dadurch gekennzeichnet, dass** im Eingangsbereich des Strömungskanals (22, 44) eine Berstscheibe vorgesehen ist, welche diesen hermetisch verschließt und derart ausgestaltet ist, dass sie bei Überschreiten eines bestimmten Berstdrucks zerbirst.

3. Reaktordruckentlastungsfiltersystem nach einem der vorherigen Ansprüche, **dadurch gekennzeichnet, dass** der Bereich des Strömungskanals (22, 44) zwischen Blende (24, 42) und Molekularsieb (18) an seiner Wandung (50) zumindest abschnittsweise thermisch isoliert (52) ist.

4. Reaktordruckentlastungsfiltersystem nach einem der vorherigen Ansprüche, **dadurch gekennzeichnet, dass** im Strömungskanal (22, 44) strömungstechnisch vor der Blende (24, 42) ein passives Druckentlastungsventil (28) vorgesehen ist, das sich bei Überschreiten eines bestimmten Maximaldrucks öffnet und bei Unterschreiten eines bestimmten Minimaldrucks schließt.

5. Reaktordruckentlastungsfiltersystem nach einem der vorherigen Ansprüche, **dadurch gekennzeichnet, dass** strömungstechnisch vor der Blende (24, 42) ein Aerosolfilter (30) vorgesehen ist.

6. Verfahren zur Dimensionierung der Blende (24, 42) und des Molekularsiebs (18) für ein Reaktordruckentlastungsfiltersystem (10) nach einem der Ansprüche 1 bis 5, **gekennzeichnet durch** folgende Schritte:
• Dimensionieren der Blende (24, 42) derart, dass sich bei Beginn einer Druckentlastung bei vorgegebenem Druck im Innenraum (14) ein gewünschter Gasmassenstrom (20, 46, 48) einstellt,
• Bestimmung von Gasmassenströmen (20, 46, 48) und erreichbaren Taupunktabständen für verschiedene Druckverhältnisse im Innenraum (14) bei gegebener Blende (24, 42),
• Bestimmung der jeweils mindestens notwendigen Verweilzeiten im Molekularsieb (18) für die verschiedenen Druckverhältnisse unter Berücksichtigung der jeweiligen Filtereffizienz,
• Dimensionierung des Molekularsiebs (18) derart, dass für alle verschiedenen Druckverhältnisse die mindestens notwendige Verweilzeit erreicht ist.

## Claims

1. Reactor pressure-relieving filter system (10), comprising
• an interior space (14) hermetically enclosed by a pressure-resistant reactor casing (12),
• at least one pressure-relieving opening (16) through the reactor casing (12),
• a dry filter (18) for a gas mass flow (20, 46, 48) emerging from the pressure-relieving opening (16) when there is excess pressure in the interior space (14),
• the dry filter (18) being a molecular sieve for the separation of iodine in gas form,
• the filtering efficiency depending both on the average dwell time of the gas mass flow (20, 46, 48) in the dry filter (18) and on the temperature difference between the gas mass flow (20, 46, 48) and the respective dew point, and
• a flow channel (22, 44) for connecting the pressure-relieving opening (16) and the dry filter (18),
**characterized in that**
• the dry filter (18) is a molecular sieve for the separation of iodine in gas form, the filtering efficiency depending both on the average dwell time of the gas mass flow (20, 46, 48) in the molecular sieve (18) and on the temperature difference between the gas mass flow (20, 46, 48) and the respective dew point,
• a passive orifice plate (24, 42) is provided directly upstream of the molecular sieve (18) in the flow channel (22, 44), whereby an overheating of a gas mass flow flowing through the molecular sieve at the beginning of a pressure relief is achieved, and
• the passive orifice plate (24, 42) and the molecular sieve (18) are dimensioned in such a way that the effect of an increased filtering efficiency as a result of an overheating of a high gas mass flow (20, 46, 48) and the contrary effect of an increased filtering efficiency as a result of a longer dwell time with a low gas mass flow (20, 46, 48) are compensated in such a way as to ensure an approximately constant filtering efficiency over the time period of a pressure relief with decreasing gas mass flow (20, 46, 48).

2. Reactor pressure-relieving filter system according to Claim 1, **characterized in that** in the entry region of the flow channel (22, 44) there is provided a rupture disc, which hermetically seals the latter and is configured in such a way that it ruptures when a certain rupturing pressure is exceeded.

3. Reactor pressure-relieving filter system according to one of the preceding claims, **characterized in that** the region of the flow channel (22, 44) between the orifice plate (24, 42) and the molecular sieve (18) is thermally insulated (52), at least in certain portions, at its wall (50).

4. Reactor pressure-relieving filter system according to one of the preceding claims, **characterized in that** upstream of the orifice plate (24, 42) in the flow channel (22, 44) there is provided a passive pressure-relieving valve (28), which opens when the pressure exceeds a certain maximum pressure and closes when the pressure goes below a certain minimum pressure.

5. Reactor pressure-relieving filter system according to one of the preceding claims, **characterized in that** an aerosol filter (30) is provided upstream of the orifice plate (24, 42).

6. Method for dimensioning the orifice plate (24, 42) and the molecular sieve (18) for a reactor pressure-relieving filter system (10) according to one of Claims 1 to 8, **characterized by** the following steps:
• dimensioning the orifice plate (24, 42) in such a way that a desired gas mass flow (20, 46, 48) is obtained at the beginning of a pressure relief with a specified pressure in the interior space (14),
• determining gas mass flows (20, 46, 48) and achievable dew point differences for different pressure conditions in the interior space (14) with a given orifice plate (24, 42),
• determining the minimum necessary dwell times in the molecular sieve (18) in each case for the different pressure conditions while taking into account the respective filtering efficiency,
• dimensioning the molecular sieve (18) in such a way that the minimum necessary dwell time is achieved for all the different pressure conditions.

## Revendications

1. Système (10) de filtre à délestage de pression pour un réacteur, comprenant :
un espace intérieur (14) fermé hermétiquement par une enveloppe (12) de réacteur résistant à la pression,
au moins une ouverture (16) de délestage de pression qui traverse l'enveloppe (12) du réacteur,
un filtre sec (18) prévu pour un écoulement massique de gaz (20, 46, 48) qui sort en surpression de l'espace intérieur (14) par l'ouverture (16) de délestage de pression,
le filtre sec (18) étant un tamis moléculaire destiné à retenir l'iode gazeux, l'efficacité du filtre dépendant à la fois du temps de séjour moyen de l'écoulement massique de gaz (20, 46, 48) dans le filtre sec (18) et de la différence de température entre l'écoulement massique de gaz (20, 46, 48) et son point de rosée particulier et
un canal d'écoulement (22, 44) qui relie l'ouverture (16) de délestage de pression et le filtre sec (18), **caractérisé en ce que**
le filtre sec (18) est un tamis moléculaire de séparation d'iode gazeux, l'efficacité du filtre dépendant à la fois du temps de séjour moyen de l'écoulement massique de gaz (20, 46, 48) dans le filtre tamis moléculaire (18) et de la différence de température entre l'écoulement massique de gaz (20, 46, 48) et son point de rosée particulier,
**en ce que** dans le canal d'écoulement (22, 44), immédiatement en amont du tamis moléculaire (18) dans la direction d'écoulement est prévu un écran passif (24, 42) qui permet d'obtenir une surchauffe de l'écoulement massique des gaz qui traversent le tamis moléculaire au début d'un délestage de pression et
**en ce que** l'écran passif (24, 42) et le tamis moléculaire (18) sont dimensionnés de telle sorte que l'effet d'une augmentation de l'efficacité du filtre par surchauffe d'un écoulement massique élevé de gaz (20, 46, 48) et l'effet opposé d'une augmentation de l'efficacité du filtre par prolongation du temps de séjour à faible écoulement massique de gaz (20, 46, 48) se compensent de telle sorte qu'une efficacité sensiblement constante du filtre est garantie pendant toute la durée d'un délestage de pression dans lequel l'écoulement massique de gaz (20, 46, 48) diminue.

2. Système de filtre à délestage de pression selon la revendication 1, **caractérisé en ce que** dans la partie d'entrée du canal d'écoulement (22, 44) est prévu un écran déchirable qui la ferme hermétiquement et qui est configuré de telle sorte qu'il se déchire lorsqu'une pression de déchirure définie est dépassée.

3. Système de filtre à délestage de pression selon l'une des revendications précédentes, **caractérisé en ce qu'**au moins certaines parties de la paroi (50) de la partie du canal d'écoulement (22, 44) située entre l'écran (24, 42) et le tamis moléculaire (18) est isolée thermiquement (52).

4. Système de filtre à délestage de pression selon l'une des revendications précédentes, **caractérisé en ce qu'**une soupape passive (28) de délestage de pression qui s'ouvre lorsqu'une pression maximale définie est dépassée et qui se ferme lorsqu'une pression minimale définie n'est plus atteinte est prévue dans le canal d'écoulement (22, 44) en amont de l'écran (24, 42) dans la direction d'écoulement.

5. Système de filtre à délestage de pression selon l'une des revendications précédentes, **caractérisé en ce qu'**un filtre (30) à aérosol est prévu en amont de l'écran (24, 42) dans la direction d'écoulement.

6. Procédé de dimensionnement de l'écran (24, 42) et du tamis moléculaire (18) pour un système de filtre à délestage de pression (10) selon l'une des revendications 1 à 5, **caractérisé par** les étapes suivantes
dimensionnement de l'écran (24, 42) de telle sorte qu'un écoulement massique souhaité de gaz (20, 46, 48) s'établisse au début d'un délestage de pression lorsqu'une pression prédéterminée est atteinte dans l'espace intérieur (14),
pour un écran (24, 42) donné, détermination d'écoulements massiques de gaz (20, 46, 48) et des écarts par rapport au point de rosée qui peuvent être atteints lorsque différentes conditions de pression règnent dans l'espace intérieur (14),
détermination des temps de séjour minimum nécessaires dans le tamis moléculaire (18) dans les différents conditions de pression, en tenant compte de l'efficacité du filtre dans chaque cas et
dimensionnement du tamis moléculaire (18) de telle sorte que le temps de séjour minimum nécessaire soit atteint dans toutes les différentes conditions de pression.
